# EUROPÄISCHE PATENTSCHRIFT

(11) **EP 1 857 248 B1**
(45) Veröffentlichungstag und Bekanntmachung des Hinweises auf die Patenterteilung: **28.11.2018**
(21) Anmeldenummer: 06011178.8
(22) Anmeldetag: 31.05.2006
(51) Int. Cl.: B29C 44/32, B29C 44/46, B29K 75/00, B29K 105/04, B29L 9/00

(54) **Vorrichtung und Verfahren zur Herstellung von geschäumten Sandwich-Verbundelementen**
Device and method for manufacturing foamed sandwich composite material elements
Dispositif et procédé de fabrication d'éléments en materiau composite moussé du type sandwich

(30) Priorität: 16.05.2006 DE 102006022760
(43) Veröffentlichungstag der Anmeldung: 21.11.2007
(73) Patentinhaber: Covestro Deutschland AG, 51373 Leverkusen (DE)
(72) Erfinder: Rüb, Thomas, 51375 Leverkusen (DE); Künzel, Uwe, 51377 Leverkussen (DE)
(74) Vertreter: Levpat

(56) Entgegenhaltungen:
- EP-A2- 0 553 695
- DE-A1- 3 151 511
- GB-A- 1 197 221
- US-A- 4 624 213
- US-A1- 2005 222 289

## Beschreibung

Die Erfindung betrifft eine Auftragsvorrichtung zum gleichzeitigen und gleichmäßigen Auftrag einer schäumbaren Reaktionsmischung auf eine Oberfläche, eine Vorrichtung zur Herstellung von Sandwich-Verbundelementen sowie ein Verfahren zur kontinuierlichen oder diskontinuierlichen Herstellung von Sandwich-Verbundelementen, insbesondere Schaumstoff-Verbund-Elementen mit starren und flexiblen Deckschichten.

Es besteht seit langem der Bedarf an Vorrichtungen für die kontinuierliche Herstellung von Sandwich-Verbundelementen bei denen man die Produktionsgeschwindigkeit auch auf Geschwindigkeiten von mehr als 15 m/min, bevorzugt bis zu 60m/min erhöhen kann.

Zur kontinuierlichen Herstellung von Sandwich-Verbundelementen sind bisher aus dem Stand der Technik oszillierende Mischköpfe bekannt. Hierbei führt der Mischkopf eine oszillierende Bewegung über die Breite der unteren Deckschicht aus und trägt das noch flüssige Reaktionsgemisch mittels Gießharke oder Zungen- /Löffeldüse, die im rechten Winkel zum Mischkopf und parallel zu unteren Deckschicht angeordnet ist, auf die untere Deckschicht auf.

Der Mischkopf ist an einer Führungsschiene, dem so genannten Portal, über der unteren Deckschicht befestigt und wird mit Hilfe von Elektromotoren beschleunigt und vor den Umkehrpunkten abgebremst. Die Verschäumungs-Rohstoffe werden über Schlauchleitungen dem Mischkopf zugeführt. Des Weiteren führen teilweise Hydraulik- oder Pneumatikschläuche zum Mischkopf. Die Verschäumungs-Rohstoffe werden über Düsen in den Mischkopf eingebracht und vermischt.

Das Reaktionsgemisch fließt danach in die Gießharke und tritt an den regelmäßig angebrachten Bohrungen aus. Durch die Länge der Gießharke und deren Bohrungen, sowie der oszillierenden Bewegung des Mischkopfs, wird eine gleichmäßige schräg zur Förderrichtung liegende Verteilung des Reaktionsgemisches erzielt.

Nach Aufbringung schäumt das Reaktionsgemisch auf und steigt bis zur oberen Deckschicht. Bei dem Aufschäumprozess verklebt es die beiden Deckschichten, bevor der Schaum erstarrt und aushärtet.

Dieses Produktionsverfahren ist physikalisch hinsichtlich der Produktionsgeschwindigkeit limitiert. Auch wenn ausreichend starke Motoren, Führungsschienen, Schläuche, Mischköpfe und Gießharken oder Zungen- oder Löffeldüsen verwenden würden, würde das Reaktionsgemisch bedingt durch zu hohe Fliehkräfte an den Umkehrpunkten über die Seiten der Deckschichten hinausgetragen. Nach dem Stand der Technik können Produktionsgeschwindigkeiten von über 15 m/min bei der kontinuierlichen Herstellung von Sandwich-Verbundelementen mit dieser Auftragstechnik nicht erreicht werden.

Hinlänglich bekannt ist die Technik, mittels stehender Mischkopftechnologie und starren Auslaufsystemen die Produktionsgeschwindigkeit auf 60 m/min zu bringen. Dieses Verfahren wird US-Technologie genannt. Diese US-Technologie (Schnellläufer) besteht im Wesentlichen aus drei gleichen Dosierlinien mit separater Zuführung und separaten Mischköpfen und Auslaufsystemen. Diese Technologie verfügt jedoch nicht über einen Verteilerkopf gemäß der vorliegenden Erfindung. Dieses Verfahren hat jedoch den Nachteil, dass das jeweils austretende Reaktionsgemisch aus den einzelnen Mischköpfen auch unterschiedlichen physikalischen Bedingungen bezüglich Druck und Temperatur unterliegt, das sich im jeweiligen erhaltenem Schaum durch Produktqualitätsminderungen wie beispielsweise ungleichmäßige Oberfläche, kleinere Zelle, unterschiedliche Wärmeleitfähigkeitswerte aufgrund punktuell unterschiedliche Reaktionskinetik bemerkbar macht.

Die Druckschrift GB 1 197 221 A offenbart eine Vorrichtung mit zwei Auslaufleitungen.

Die vorliegende Erfindung soll nun diesen Nachteil der begrenzten Auftragsgeschwindigkeit beheben.

Diese Aufgabe wird gelöst durch eine Auftragsvorrichtung zur Herstellung von über die Reaktionsfläche gleichzeitig auftragenden und gleichmäßig aufschäumenden Schäumen, gemäß Anspruch 1.

Die erfindungsgemäße Auftragsvorrichtung enthält mindestens 3 am Verteilerkopf angebrachte, gleichlange, mit gleichem Querschnitt versehene und aus gleichem Material bestehende Auslaufleitungen.

Vorteilhaft ist die erfindungsgemäße Auftragsvorrichtung, wenn die Auslaufleiturigen der Panelgeometrie angepasst positioniert sind und das auslaufende Reaktionsgemisch über die gesamte Breite der unteren Deckschicht gleichmäßig verteilt ist.

Vorteilhaft ist die erfindungsgemäße Auftragsvorrichtung, wenn die Auslaufleitungen an dem Gestell so angebracht sind, dass das Reaktionsgemisch in Förderrichtung des Reaktionsbandes auf die untere Deckschicht aufgetragen wird.

Vorteilhaft ist die erfindungsgemäße Auftragsvorrichtung, wenn die Auslaufleitungen an dem Gestell so angebracht sind, dass das Reaktionsgemisch gegen die Förderrichtung des Reaktionsbandes auf die untere Deckschicht aufgetragen wird.

Ein weiteres Beispiel ist eine Vorrichtung zur Herstellung von Sandwich-Verbundelementen, wobei sie wenigstens zwei Zufuhrvorrichtungen für eine obere und eine untere Deckschicht, ein umlaufendes Oberband zur Führung der oberen Deckschicht, ein umlaufendes Unterband zur Führung der unteren Deckschicht an die eine erfindungsgemäße Auftragsvorrichtung für eine geschäumte Kernschicht, eine Formstrecke und eine Ablängvorrichtung hintereinander geschaltet sind.

Die erfindungsgemäbe Vorrichtung ist zur Herstellung von Sandwich-Verbundelementen, geeignet, wobei eine geschäumte PUR-Kernschicht verwendet wird.

Eine weitere Ausführungsform der Erfindung ist ein Verfahren zur Herstellung von geschäumten Sandwich-Verbundelementen, wobei die erfindungsgemäße Vorrichtung zur Herstellung von Sandwich-Verbündelementen eingesetzt wird und eine oder beide von den im Mischkopf miteinander vermischten Komponenten bereits vorher oder im Mischkopf selber mit einem inerten Gas vermischt werden.

Vorteilhaft ist das erfindungsgemäße Verfahren, wenn das chemisch inerte Gas ausgewählt ist aus der Gruppe von Luft, Stickstoff, Kohlendioxid und Edelgasen wie Argon und Helium. Bevorzugt wird Luft als chemisch inertes Gas eingesetzt.

Bei der erfindungsgemäßen Auftragsvorrichtung ist ebenfalls ein Mischkopf oberhalb der unteren Deckschicht an einem Gestell angebracht, wobei dieses Gestell nicht beweglich ist, so dass unterschiedliche Reaktionsprofile zur Herstellung von unterschiedlich dicken Produkten möglich sind. An den Mischkopf, in dem die einzelnen Verschäumungs-Komponenten zusammen gemischt werden, ist ein Verteilerkopf befestigt. Dieser Verteilerkopf besitzt wenigstens 3 maximal 8 Auslaufleitungen, deren Länge, Querschnitt und Material bevorzugt alle gleich sind. Dies hat den Vorteil, dass das Schaumverhalten des noch flüssigen Reaktionsgemisches beim Auftreffen auf die untere Deckschicht an jedem Auftreffpunkt gleich weit fortgeschritten ist, was zu einer besonders einheitlichen Verschäumung des hergestellten Produktes führt. Dieser Vorteil wird nicht nur durch die gleiche Länge, Querschnitt und Material der Auslaufleitungen begünstigt sondern auch dadurch, dass das gesamte aufzutragende Gemisch aus ein und demselben Mischkopf herauskommt. Als Auslaufleitung kann jedes dem Fachmann bekannte Material genutzt werden, das nicht mit dem zu schäumendem Reaktionsgemisch reagiert und an dem das Reaktionsgemisch nicht unverhältnismäßig stark haftet. Bevorzugt ist das Material der Auslaufleitung ausgewählt aus der Gruppe von Stahl, Aluminium, Edelstahl, Polyethylen (PE), Polypropylen (PP), Polyvinylchlorid (PVC), Polyethylenterephthalat (PET), Kautschuk,. Polytetrafluorethylen (PTFE) und Polyurethan (PU), Als Kautschuk ist jeder dem Fachmann bekannte in Zuleitung verarbeitbare flexible Kautschuk zu verstehen, bevorzugt ist Nitril-Butadien-Kautschuk (NBR). Besonders bevorzugt ist ein biegsames Material ausgewählt aus der Gruppe von PE, PP, PET und PVC. Die Auslaufleitungen sind an einem in Querrichtung zur Förderrichtung des Transportbandes über der oberen Deckschicht angeordneten, starren Gestell so angeordnet und fixiert, dass sie der Panelgeometrie angepasst sind und ein über die Breite der unteren Deckschicht gleichmäßiger Auftrag gewährleistet ist. Vorteilhaft sind die Auslaufleitungen so über der unteren Deckschicht angeordnet, dass das Reaktionsgemisch so auf die untere Deckschicht aufgebracht wird, dass die nicht benetzten Bereiche zwischen den einzelnen Auftragsbereichen auf der unteren Deckschicht gleichgroß sind. Während des Ausschäumens schließen sich die Lücken, so dass ein gleichmäßiges Ausschäumen der Verbundelemente gewährleistet ist. Zur Feinjustierung sind die Auslaufleitungen an dem starren Gestell in Querrichtung zur Förderrichtung des Transportbandes verschiebbar. Des Weiteren sind die Auslaufleitungen an dem Gestell so angebracht, dass das Reaktionsgemisch entweder in oder gegen Förderrichtung des Transportbandes auf die untere Deckschicht auftrifft. Ob das Reaktionsgemisch in oder gegen die Förderrichtung des Transportbandes auf die untere Deckschicht auftritt, ist von der Austragsgeschwindigkeit aus den Auslaufleitungen und von der Fördergeschwindigkeit des Transportbandes und gegebenenfalls von der Viskosität des Reaktionsgemisches abhängig. Bei einer Austragsgeschwindigkeit von 1,2 bis 2 m/min und einer Fördergeschwindigkeit von 20 bis 60 m/min ist es vorteilhaft, wenn der Auftrag des Reaktionsgemisches gegen die Förderrichtung erfolgt. Bei einer Austragsgeschwindigkeit von 1,2 bis 2 m/min und einer Fördergeschwindigkeit bis zu 20 m/min ist ein Auftrag in Förderrichtung des Transportbandes vorteilhaft.

In einer besonderen Ausführung, kann der Mischkopf als auch der Verteilerkopf samt den Auslaufleitungen so angeordnet und fixiert werden, dass auch Produkte mit einer in Querrichtung zur Förderrichtung des Transportbandes abfallenden Dicke oder mit sich ständig ändernden Dickenverhältnissen hergestellt werden können, wobei die nicht benetzten Bereiche zwischen den einzelnen Auftragsbereichen auf der unteren Deckschicht linear abnehmend oder immer unterschiedlich groß sein können. Während des Ausschäumens schließen sich diese Lücken, so dass ein in gewünschter Weise unregelmäßiges Ausschäumen in der Höhe der Produkte ermöglicht wird.

Durch diese Art der Anordnung kann auf ein Portal wie es bei der oszillierenden Gießharke bzw. Zungen- /Löffeldüse zwingend notwendig ist, verzichtet werden. Des Weiteren sind mit dieser Anordnung die Produktionsgeschwindigkeiten nur noch von der Geschwindigkeit des Transportbandes oder der Austragsleistung der Verschäumungsmaschine abhängig. Geschwindigkeiten von größer 15m /min bis maximal 60m/min können mit dieser Anordnung erreicht werden. Ein weiterer Vorteil dieser erfindungsgemäßen Vorrichtung gegenüber Verfahren, die mehrere Mischköpfe einsetzen müssen, ist der, dass durch die Verwendung von nur einem Mischkopf keine Schwankungen durch unterschiedliche Verarbeitungsdrücke, Temperaturen, oder ähnliches, wodurch die Produktionssicherheit und Produktqualität erniedrigt wird, auftreten können.

Als Mischkopf für die erfindungsgemäße Vorrichtung können alle im Stand der Technik bekannten Mischköpfe eingesetzt werden. Diese müssen jedoch zur Verschäumung von Polyolkomponente und Polyisocyanatkomponente für die Herstellung von Polyurethan-Sandwich-Verbundelementen geeignet sein. Das chemisch inerte Gas kann dem Reaktionsgemisch im Mischkopf oder einer oder beiden Reaktionskomponenten bereits vorher zugemischt werden, um eine mögliche Verstopfung der Auslaufleitungen zu verhindern. Das chemisch inerte Gas ist ausgewählt aus der Gruppe von Stickstoff, Luft, Kohlendioxid und Edelgasen wie Argon und Helium. Anstatt eines Gases können auch andere Bestandteile den Reaktionskomponenten hinzugemischt werden. Diese Stoffe sind ausgewählt aus der Gruppe von Graphit, Polyurethanmehl, Melamin, Quarzsand Al₂O₃, Talkum und Nanokomposite wie beispielsweise Schichtsilicate, Nanotubes, Nanosand und werden den Reaktionskomponenten im Mischkopf zugegeben.

Das Material des Verteilerkopfes kann ausgewählt sein aus Stahl, Edelstahl, Aluminium und Kunststoffen. In jedem Fall muss dass ausgewählte Material den im Mischkopf herrschenden Drücken und Temperaturen im Bereich von 0,5 bis 3 bar und 20 bis 40°C standhalten. Die Geometrie des Verteilerkopfes ist bevorzugt so gewählt, dass die Wegstrecke vom Eingang des Verteilers bis zu den jeweiligen Ausgängen zu den Auslaufleitungen gleichlang ist. Des Weiteren ist es vorteilhaft, wenn der Querschnitt der Verteilerkopfausgänge bei allen Verteilerkopfausgängen identisch ist. Der Querschnitt des Verteilerkopfeingangs kann dagegen auch größer sein als die jeweiligen Verteilerkopfausgänge.

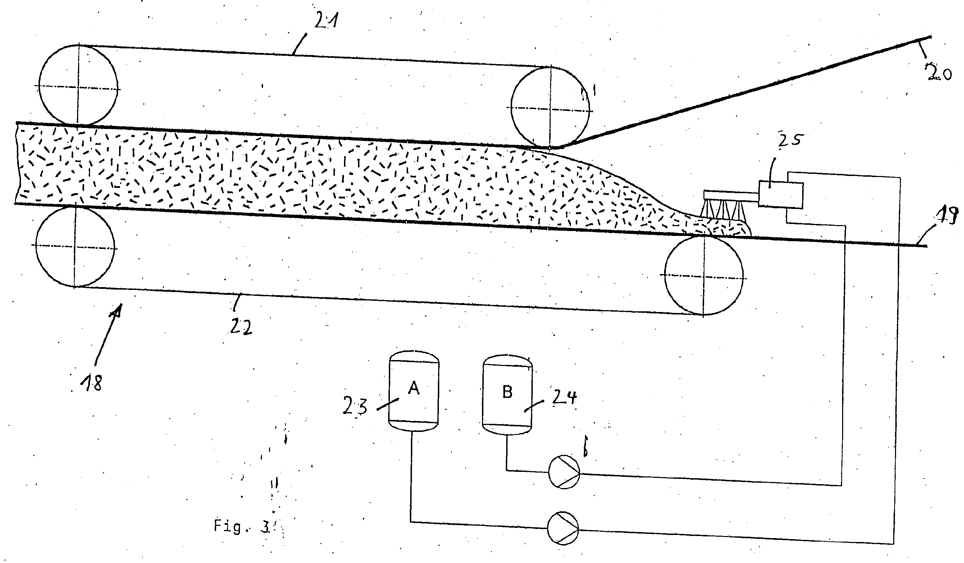

Die erfindungsgemäße Auftragsvorrichtung kann Bestandteil einer weiteren Vorrichtung sein, die zur Herstellung von Sandwich-Verbundelementen eingesetzt wird. Die Herstellung von Polyurethan-Sandwichelementen (Panels) erfolgt im Allgemeinen in einem kontinuierlichen Prozess. Dabei werden die Panels endlos auf so genannten Doppel-Transportbändern in Dicken von in der Regel ca. 20 bis 240 mm hergestellt. Dicken von unter 20 mm und über 240 mm sind aber ebenfalls möglich. Ein solches Doppel-Transportband besteht dabei üblicherweise aus einem umlaufenden Oberband zur Führung der oberen Deckschicht, einem umlaufenden Unterband zur Führung der unteren Deckschicht, einer Zuführeinrichtung für die obere Deckschicht, einer Zuführeinrichtung für die untere Deckschicht, einer Formstrecke, innerhalb derer das Polyurethan-Reaktionsgemisch zwischen der oberen Deckschicht und der unteren Deckschicht aufschäumt und ausreagiert, einer Ablängeinrichtung für das hergestellte Panel sowie einer Dosierstation mit einem Mischkopf zum Auftragen der Polyurethan-Reaktionsmischung auf die untere Deckschicht. Ein Doppel-Transportband nach dem Stand der Technik ist in Figur 3 dargestellt.

Die Anordnung der einzelnen Elemente für ein kontinuierliches Herstellungsverfahren für Sandwich-Verbundelemente ist aus dem Stand der Technik, wie in DE-A 1 247 612 und DE-A 1 609 668 beschrieben, bekannt.

Im Rahmen der vorliegenden Erfindung wird unter einem Sandwich-Verbundelement ein Verbundelement verstanden, welches wenigstens aus zwei Deckschichten und einer dazwischen liegenden Kernschicht aufgebaut ist.

Als Kernschicht können alle dem Fachmann bekannten Materialien eingesetzt werden. Bevorzugt sind Faserplatten aus Mineralfasern- oder Platten aus Hartschaumstoff, wie beispielsweise Polyurethan- oder Polyisocyanurat (PIR)-Hartschaumstoff, Polystyrolschaumstoff, Phenolharzschaumstoff.

Im Besonderen bestehen Sandwich-Verbundelemente wenigstens aus zwei Deckschichten aus starren oder flexiblen Material und einer Kernschicht aus einem Schaumstoff wie beispielsweise einem PUR-Hartschaumstoff. Hierbei sind unter PUR Hartschaumstoffe solche Hartschaumstoffe zu verstehen, die auf Polyurethan-, Polyharnstoff- als auch Polyisocyanuratverbindungen basieren.

Als Kernschicht werden bevorzugt Hartschaumstoffe, auf Basis von Polyurethan und/oder Polyisocyanurat, gewählt. Zur Herstellung von Polyurethan- und/oder Polyisocyanuratgruppen aufweisenden Hartschaumstoffen können als Ausgangskomponenten alle dem Fachmann bekannten Verbindungen mit gegenüber OH-Verbindungen reaktiven NCO-haltigen Verbindungen wie a) aliphatischen, cycloaliphatischen, äraliphatischen, aromatischen und heterocyclischen Polyisocyanate, bevorzugt Diphenylmethandiisocyanat (MDI) oder Polyphenylpolymethylenpolyisocyanate, Carbodiimidgruppen, Urethangruppen, Allophanatgruppen, Isocyanuratgruppen, Harnstoffgruppen oder Biuretgruppen aufweisende Polyisocyanate, besonders bevorzugt auf der Basis von Polyphenylpolymethylenpolyisocyanat und b) Verbindungen mit-mindestens zwei gegenüber Isocyanaten reaktiven Wasserstoffatomen mit einem Molekulargewicht im Bereich von 400 bis 10.000 g/mol, wie beispielsweise Aminogruppen, Thiolgruppen, Hydroxylgruppen oder Carboxylgruppen aufweisende Verbindungen eingesetzt werden. Darüber hinaus ist die Verwendung von geeigneten NCO-Prepolymeren, hergestellt aus der Umsetzung von polymerem MDI mit aliphatischen oder aromatischen Polyetherpolyolen oder Polyesterpolyolen, beispielsweise 1 bis 4 Hydroxylgruppen aufweisenden Polyetherpolyolen oder Polyesterpolyolen mit einem zahlenmittleren Molekulargewicht von 60 bis 4000 möglich.

Die Herstellung der Schaumstoffe erfolgt unter Verwendung von den üblichen, dem Fachmann bekannten Hilfs- und Zusatzstoffen wie Katalysatoren, Treibmitteln, Vernetzern, Flammschutzmitteln Schaumstabilisatoren, Fließverbesserern, Inhibitoren, sowie gegebenenfalls festen Additiven zur Verbesserung der Wärmeleitfähigkeit und des, Flammschutzes.

Als Materialien für die Deckschichten können alle dem Fachmann bekannten Materialien eingesetzt werden. Bevorzugt sind Metalle wie Stahl (verzinkt und/oder lackiert), Aluminium (lackiert und/oder eloxiert), Kupfer, Edelstahl oder Nichtmetalle wie verstärkte, unverstärkte und/oder gefüllte Kunststoffe, wie beispielsweise Polyvinylchlorid oder auf Polyesterbasis oder Glasfasern, imprägnierte Pappe, Papier, Holz, Bitumenglasvlies und mineralisches Glasvlies.

Beispielsweise können die Deckschichten mit einem Lack, beschichtet sein.

Auch Kombinationen der Deckschichten auf den jeweiligen Seiten des hergestellten Panels aus den zuvor genannten Werkstoffen sind als Deckschichten geeignet.

Derartige Verbundelemente auf Basis von unterschiedlichen Deckschichten (starr oder flexibel) und einer Kernschicht aus Polyurethan-Hartschaumstoff sind aus dem Stand der Technik hinlänglich bekannt und werden auch als Metallverbundelemente und Dämmplatte bezeichnet. Zwischen der Kernschicht und den Deckschichten können weitere Schichten vorgesehen sein.

Beispiele für die Anwendung solcher Verbundelemente mit starren Deckschichten sind ebene oder linierte Wandelemente sowie profilierte Dachelemente für den Industriehallenbau und Kühlhausbau. Auch finden die Verbundelemente als LKW-Aufbauten, Hallentüren und Tore sowie im Containerbau Einsatz. Dämmplatten, Verbundelemente mit flexiblen Deckschichten, finden Einsatz als Dämmmaterialien von Dächern, Außenwänden und als Fußbodenplatten.

Die Herstellung dieser Verbundelemente nach einem kontinuierlichen oder diskontinuierlichen Verfahren ist aus_dem Stand der Technik hinlänglich bekannt. Hierfür wird das noch flüssige Reaktionsgemisch auf die untere Deckschicht mittels der erfindungsgemäßen Auftragsvorrichtung aufgetragen. Das nun langsam aufschäumende Reaktionsgemisch wird auf der unteren Deckschicht mittels eines Unterbandes in die Formstrecke, die von einem Ober- und Unterband aufgespannt wird, transportiert. Das aufschäumende Reaktionsgemisch erreicht die obere Deckschicht und verklebt somit die beiden Deckschichten miteinander. Innerhalb der Formstrecke, wobei das Ober- und Unterband die Dicke des herzustellenden Produktes vorgibt, verfestigt sich der Schaum und wird nach Durchlauf durch die Formstrecke über eine Ablängvorrichtung, zum Schneiden der so hergestellten Panels in gewünschte Längen, abgelängt.

Nachfolgend wird die Erfindung anhand der beigefügten Zeichnungen näher erläutert. Es zeigen:
- Figur 1:: eine schematische Darstellung des Reaktionsgemischauftrages mittels der erfin-dungsgemäßen Vorrichtung enthaltend Mischkopf mit anschließendem Verteiler-kopf,
- Figur 2:: eine schematische Darstellung des PUR-Reaktionsgemischauftrags mittels oszillie-rendem Mischkopf und Gießharke,
- Figur 3:: eine schematische Darstellung des kontinuierlichen Produktionsprozesses von Verbundelementen mit flexiblen oder starren Deckschichten. Figur 2 zeigt

2 eine Vorrichtung zum Auftragen eines noch flüssigen Reaktionsgemisches (5) auf eine untere Deckschicht (6). Der Auftrag des flüssigen Reaktionsgemisches (5) erfolgt mit Hilfe eines Mischkopfes (2), der oberhalb der unteren Deckschicht (6) auf einer Führungsschiene, dem so genanntem Portal (nicht dargestellt) befestigt ist und einer an dem Mischkopf gekoppelten Gießharke (4). Der Mischkopf (2) weist zusätzliche Bohrungen (3) auf, die als Zuleitungsöffnungen für die im Mischkopf zu vermischenden Komponenten fungieren. An den Mischkopf (2) schließt sich im rechten Winkel und parallel zur unteren Deckschicht die Gießharke (4) an, die entlang der Förderrichtung hintereinander angeordnete Bohrungen aufweist, aus denen das noch flüssige Reaktionsgemisch (5) auf die Deckschicht (6) aufgetragen wird. Der Mischkopf selber wird oszillierend über die Breite der Deckschicht mittels Elektromotoren (nicht dargestellt) bewegt, so dass der Auftrag des Reaktionsgemisches (5), aufgrund des kontinuierlichen Schubs der Deckschicht in Förderrichtung, schräg auf der Deckschicht (6) erfolgt. Die Elektromotoren beschleunigen den Mischkopf samt daran befestigter Gießharke zu den Umkehrpunkten (7), die sich jeweils am Ende der Breitenausdehnung der Deckschicht befinden (hier nur ein Umkehrpunkt dargestellt), wobei kurz vor Erreichen des Umkehrpunktes (7) der Mischkopf wieder abgebremst wird, um einen gleichmäßigen Auftrag über die gesamte Breite der Deckschicht erzielen zu können und ein Heraustragen aus der Breite der Deckschicht aufgrund der entstehenden Fließkräfte zu vermeiden.

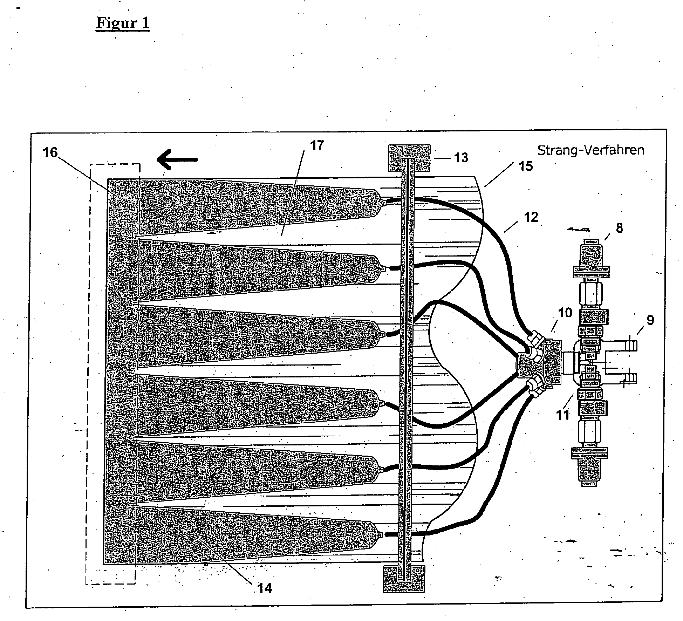

### Figur 1 zeigt

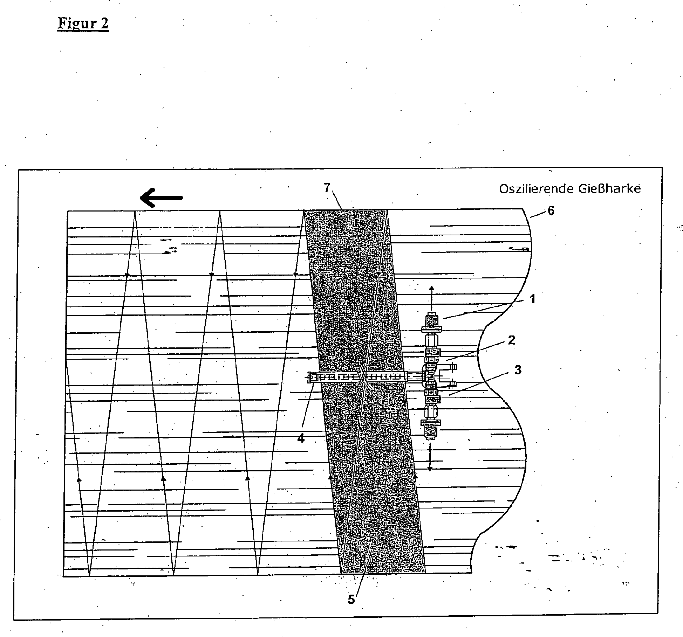

1 die erfindungsgemäße Auftragsvorrichtung für ein noch flüssiges Reaktionsgemisch (14) auf eine untere Deckschicht (15). Auch hier enthält die Auftragsvorrichtung einen Mischkopf (9), der oberhalb der unteren Deckschicht (15) angeordnet ist und zusätzliche Bohrungen (11) als Zuleitungsöffnungen für die Reaktionskomponenten enthält. An den Mischkopf (9) schließt sich ein Verteilerkopf (10) an, von dem aus 6 gleichlange und mit gleichen Durchmessern versehene und aus dem gleichen Material bestehende Auslaufleitungen (12) befestigt sind. Die Auslaufleitungen (12) sind so über die gesamte Breite der unteren Deckschicht (15) an der Unterseite eines quer zur Förderrichtung verlaufenden Gestells (13) befestigt, dass ein gleichmäßiger Auftrag auf die Deckschicht in Förderrichtung des Transportbandes erfolgen kann. Das Gestell (13) ist starr

über der unteren Deckschicht angeordnet. Zur Feinjustage können die Auslaufleitungen (12) ihre Position an dem Gestell (13) quer zur Förderrichtung verändern (nicht dargestellt). Die in Figur 2 dargestellte Ausführungsform der erfindungsgemäßen Auftragsvorrichtung sieht eine an die Panelgeometrie angepasste Anordnung der Auslaufleitungen (12) an dem Gestell (13) vor, die es ermöglicht, dass das noch flüssige Reaktionsgemisch so auf die untere Deckschicht (15) auftrifft, dass die nicht bedeckten Flächen (17) der unteren Deckschicht (15) zwischen den der bedeckten Flächen gleichgroß sind, um ein gleichmäßiges Aufschäumen über die gesamte Breite der Deckschicht zu gewährleisten. Während des weiteren Aufschäumens des flüssigen Reaktionsgemisches (14) werden so die Lücken (17) gleichmäßig geschlossen (16). In einer weiteren Ausführungsform können die Auslaufleitungen (12) an dem Gestell (13) auch so angebracht sein, dass der Auftrag des Reaktionsgemisches auf die untere Deckschicht (15) gegen die Förderrichtung des Transportbandes erfolgen kann. In einer weiteren Ausführungsform können die Auslaufleitungen (12) an dem Gestell (13) auch so angeordnet sein, dass sich die Dicke des jeweilig her gestellten Sandwich-Verbundelements im Breitenverlauf quer zur Förderrichtung des Transportbandes verändert.

Figur 3 zeigt eine Vorrichtung (18) zur Herstellung von Polyurethan-Sandwichelementen nach dem Stand der Technik. Dabei werden eine untere Deckschicht (19) und eine obere Deckschicht (20) kontinuierlich durch entsprechende Zuführeinrichtungen (nicht dargestellt) in den in Längsrichtung ausgedehnten Spalt zwischen dem umlaufenden Oberband (21) und dem umlaufenden Unterband (22), der so genannten Formstrecke, gefördert und darin geführt.

Die Polyolkomponente A und Isocyanatkomponente B werden aus den jeweils zugeordneten Arbeitsbehältem (23) und (24) über zugeordnete Pumpen und Leitungen zum Mischkopf (25) gefördert, dort vermischt und das dabei entstehende Polyurethan-Reaktionsgemisch auf die untere Deckschicht (19) aufgebracht, indem der Mischkopf (25) quer zur Transportrichtung über der Breite der unteren Deckschicht (19) traversiert. Das auf der unteren Deckschicht (19) aufgebrachte Polyurethan-Reaktionsgemisch schäumt auf und wird durch die Längsbewegung der unteren Deckschicht (19) in die Formstrecke transportiert, die von dem umlaufenden Oberband (21) und dem umlaufenden Unterband (22) aufgespannt wird. In der Formstrecke schäumt und reagiert das Polyurethan-Reaktionsgemisch zwischen der oberen Deckschicht (20) und der unteren Deckschicht (19) aus, so dass nach Durchlauf der Formstrecke ein Polyurethan-Sandwichelement erhalten wird, das anschließend abgelängt und weiterbearbeitet werden kann.

## Patentansprüche

1. Auftragsvorrichtung geeignet zur Herstellung von über die Reaktionsfläche gleichzeitig auftragenden und gleichmäßig aufschäumenden Schäumen zur Bildung einer PUR- Kernschicht von Sandwich-Verbundelementen, wobei die Vorrichtung einen Mischkopf (9), einen Verteilerkopf (10), mindestens 4 oder mehr an den Verteilerkopf (10) angebrachte Auslaufleitungen (12), die quer zur Ausströmrichtung an einem starren Gestell (13) befestigt sind, enthält, wobei die Auslaufleitungen (12) gleichlang, mit gleichem Querschnitt versehen und aus gleichem Material gebildet sind und an dem starren Gestell (13) in Querrichtung zur Förderrichtung des Transportbandes verschiebbar sind.

2. Auftragsvorrichtung nach Anspruch 1, wobei die Auslaufleitungen (12) so an dem Gestell (13) befestigt sind, dass die vom ausströmenden Gemisch nicht benetzten Flächen (17) der unteren Deckschicht (15) gleichgroß sind.

3. Auftragsvorrichtung nach Anspruch 1 oder 2, wobei die Auslaufleitungen (12) so an dem Gestell (13) befestigt sind, dass diese an die Geometrie des herzustellenden Sandwich-Verbundelementes angepasst sind und dass das auslaufende Reaktionsgemisch (14) über die gesamte Breite der unteren Deckschicht (15) gleichmäßig verteilt ist

4. Auftragsvorrichtung nach Anspruch 1 oder 2, wobei die Auslaufleitungen (12) so an dem Gestell (13) befestigt sind, dass das auslaufende Reaktionsgemisch (14) nicht über die gesamte Breite der unteren Deckschicht (15) gleichmäßig verteilt ist.

5. Auftragsvorrichtung nach einem der vorgenannten Ansprüche, wobei die Auslaufleitungen (12) an dem Gestell (13) so angebracht sind, dass das Reaktionsgemisch (14) in Förderrichtung des umlaufenden Unterbandes (22) auf die untere Deckschicht (15) aufgetragen wird.

6. Auftragsvorrichtung nach einem der vorgenannten Ansprüche, wobei die Auslaufleitungen (12) an dem Gestell (13) so angebracht sind, dass das Reaktionsgemisch (14) gegen die Förderrichtung des umlaufenden Unterbandes (22) auf die untere Deckschicht (15) aufgetragen wird.

7. Vorrichtung (18) zur Herstellung von Sandwich-Verbundelementen, **dadurch gekennzeichnet, dass** diese wenigstens zwei Zuführvorrichtungen für eine obere (20) und eine untere Deckschicht (15, 19), ein umlaufendes Oberband (21) zur Führung der oberen Deckschicht (20), eine umlaufendes Unterband (22) zur Führung der unteren Deckschicht (15, 19) und, hintereinander geschaltet, eine Auftragsvorrichtung gemäß einem der Ansprüche 1 bis 6, eine Formstrecke und eine Ablängvorrichtung aufweist.

8. Verfahren zur Herstellung von geschäumten Sandwich-Verbundelementen mit zwei Deckschichten (15, 19, 20) und einer dazwischen liegenden PUR-Kernschicht, wobei eine Vorrichtung nach Anspruch 7 eingesetzt wird und eine oder beide von den im Mischkopf (9) miteinander vermischten Komponenten bereits vorher oder im Mischkopf (9) selber mit einem inerten Gas vermischt werden.

9. Verfahren nach Anspruch 8, wobei das chemisch inerte Gas ausgewählt ist aus der Gruppe von Luft, Kohlendioxid und Edelgasen.

## Claims

1. Application apparatus suitable for the production of uniformly expanding foams applied simultaneously over the reaction area for the formation of a PUR core layer of sandwich composite elements, the apparatus containing a mixing head (9), a distributor head (10) and at least four or more outflow lines (12) which are mounted on the distributor head (10) and are fastened transversely to the outflow direction on a rigid frame (13), the outflow lines (12) being of equal length, being provided with the same cross section, being formed from the same material and being movable on the rigid frame (13) transversely to the transport direction of the conveyor belt.

2. Application apparatus according to Claim 1, the outflow lines (12) being fastened to the frame (13) so that those areas (17) of the lower outer layer (15) which are not wetted by the outflowing mixture are of equal size.

3. Application apparatus according to Claim 1 or 2, the outflow lines (12) being fastened to the frame (13) so that they are adapted to the geometry of the sandwich composite element to be produced and that the outflowing reaction mixture (14) is distributed uniformly over the total width of the lower outer layer (15) .

4. Application apparatus according to Claim 1 or 2, the outflow lines (12) being fastened to the frame (13) so that the outflowing reaction mixture (14) is not distributed uniformly over the total width of the lower outer layer (15).

5. Application apparatus according to any of the preceding claims, the outflow lines (12) being mounted on the frame (13) so that the reaction mixture (14) is applied to the lower outer layer (15) in the transport direction of the revolving lower belt (22).

6. Application apparatus according to any of the preceding claims, the outflow lines (12) being mounted on the frame (13) so that the reaction mixture (14) is applied to the lower outer layer (15) in a direction opposite to the transport direction of the revolving lower belt (22).

7. Apparatus (18) for the production of sandwich composite elements, **characterized in that** said apparatus contains at least two feed apparatuses for an upper (20) and a lower outer layer (15, 19), a revolving upper belt (21) for guiding the upper outer layer (20) and a revolving lower belt (22) for guiding the lower outer layer (15, 19), and, connected in series, an application apparatus according to any of Claims 1 to 6, a moulding zone and an apparatus for cutting to length.

8. Process for the production of foamed sandwich composite elements having two outer layers (15, 19, 20) and a PUR core layer lying therebetween, an apparatus according to Claim 7 being used and one or both of the components mixed with one another in the mixing head (9) being mixed with an inert gas beforehand or in the mixing head (9) itself.

9. Process according to Claim 8, the chemically inert gas being selected from the group consisting of air, carbon dioxide and noble gases.

## Revendications

1. Ensemble d'extraction convenant pour former des mousses appliquées simultanément sur la surface de réaction et moussant simultanément, en vue de former une couche d'âme en PUR d'éléments composites en sandwich, l'ensemble contenant une tête de mélange (9), une tête de répartition (10), au moins plusieurs conduits de sortie (12) ménagés sur la tête de répartition (10) et fixés transversalement par rapport à la direction d'écoulement de sortie sur un bâti rigide (13),
les conduits de sortie (12) ayant tous la même longueur et la même section transversale, étant tous formés du même matériau et pouvant se déplacer sur le bâti rigide (13) dans la direction transversale par rapport à la direction d'avancement de la bande transporteuse.

2. Ensemble d'extraction selon la revendication 1, dans lequel les conduits de sortie (12) sont fixés sur le bâti rigide (13) de telle sorte que les surfaces (17) de la couche inférieure de recouvrement (15) non mouillées par le mélange sortant soient de même taille.

3. Ensemble d'extraction selon les revendications 1 ou 2, dans lequel les conduits de sortie (12) sont fixées sur le bâti rigide (13) de telle sorte qu'elles soient adaptées à la géométrie de l'élément composite en sandwich à fabriquer et que le mélange de réaction (14) sortant soit réparti uniformément sur toute la largeur de la couche inférieure de recouvrement (15).

4. Ensemble d'extraction selon les revendications 1 ou 2, dans lequel les conduits de sortie (12) sont fixés sur le bâti rigide (13) de telle sorte que le mélange de réaction (14) sortant ne soit pas réparti uniformément sur toute la largeur de la couche inférieure de recouvrement (15).

5. Ensemble d'extraction selon l'une des revendications précédentes, dans lequel les conduits de sortie (12) sont placés sur le bâti rigide (13) de telle sorte que le mélange de réaction (14) soit appliqué sur la couche inférieure de recouvrement (15) dans la direction d'avancement de la bande inférieure (22) circulant en boucle fermée.

6. Ensemble d'extraction selon l'une des revendications précédentes, dans lequel les conduits de sortie (12) sont placés sur le bâti rigide (13) de telle sorte que le mélange de réaction (14) soit appliqué sur la couche inférieure de recouvrement (15) dans la direction opposée à la direction d'avancement de la bande inférieure (22) circulant en boucle fermée.

7. Ensemble (18) de fabrication d'éléments composites en sandwiche, **caractérisé en ce que** l'ensemble présente au moins deux ensembles d'amenée d'une couche supérieure de recouvrement (20) et d'une couche inférieure de recouvrement (15, 19), une bande supérieure (21) circulant en boucle fermée et guidant la couche supérieure de recouvrement (20), une bande inférieure (22) circulant en boucle fermée pour amener la couche inférieure de recouvrement (15, 19) et, à la suite les uns des autres, un ensemble d'application selon l'une des revendications 1 à 6, un parcours de façonnage et un ensemble de découpe à longueur.

8. Procédé de fabrication d'éléments composites moussés en sandwiche présentant deux couches de recouvrement (15, 19, 20) et entre elles une couche d'âme en PUR, en utilisant un ensemble selon la revendication 7 et un ou deux composants mélangés l'un avec l'autre et avec un gaz inerte en amont de la tête de mélange (9) ou dans la tête de mélange (9) proprement dite.

9. Procédé selon la revendication 8, dans lequel le gaz chimiquement inerte est sélectionné dans l'ensemble constitué de l'air, du dioxyde de carbone et des gaz rares.
